# EUROPEAN PATENT APPLICATION

(11) **EP 2 623 827 A1**
(43) Date of publication of application: **07.08.2013**
(21) Application number: 11828313.4
(22) Date of filing: 31.08.2011
(51) Int. Cl.: F16K 31/42, F16K 11/044, F16K 31/04, F16K 31/06

(54) **CONTROL VALVE**

(30) Priority: 30.09.2010 JP 2010221388
(71) Applicant: TGK CO., Ltd., Tokyo 193-0942 (JP)
(72) Inventor: HIROTA, Hisatoshi, Hachioji-shi, Tokyo 193-0942 (JP)
(74) Representative: Schröer, Gernot H.
(86) International application number: PCT/JP2011/004874
(87) International publication number: WO 2012/042745

(57) **Abstract**

A control valve 1 according to an embodiment includes: a body 5 having an inlet port 20 for introducing a refrigerant from an upstream side, an outlet port 22 for delivering the refrigerant to a downstream side, and a valve hole 28 for communicating the inlet port 20 and the outlet port 22; a valve element 66 having flexibility configured to open and close a valve portion by being attached and detached to and from a valve seat 30 provided at an opening portion of the valve hole 28; a solenoid 4 configured to drive the valve element 66 in the opening and closing direction of the valve portion; a pressure-receiving body 57 configured to work integrally with the valve element 66 by being arranged to face the valve element 66 and configured to receive a pressure, oriented in the valve-closing direction, on a surface that faces the valve element 66; and a sealing member 56 having flexibility configured to enlarge an effective pressure-receiving area of the pressure-receiving body 57 by closely contacting the pressure-receiving body 57 when the valve portion is closed.

## Description

### TECHNICAL FIELD

The present invention relates to a control valve configured to control a flow of a fluid from an upstream side to a downstream side.

### BACKGROUND ART

An automotive air conditioner is generally formed by arranging a compressor, a condenser, and an evaporator, etc., in a refrigerant circulation passage. Various control valves are provided in order to switch the refrigerant circulation passages and adjust a refrigerant flow rate in accordance with an operation state of such a refrigeration cycle (see, for example, Patent Document 1). Many of such control valves comprise an actuator, such as a solenoid, so that an opening degree thereof can be externally and electrically adjusted.

### [Patent Document]

[Patent Document 1] Japanese Patent Application Publication No. 1999-287354

### DISCLOSURE OF THE INVENTION

### Problem to be solved by the Invention

Such a control valve has a valve element in the body thereof to open and close a valve portion by driving the valve element with an actuator. In order to efficiently exert a drive force by the actuator on the valve element, some of the control valves comprise a cancellation structure that cancels a pressure of a refrigerant acting on the valve element. However, there are sometimes the cases where, because a sealing member, which is provided to prevent leakage of a refrigerant that may occur while the valve element is working, is present, such a cancellation structure is not strictly achieved or there is a limit in a working response of the valve element, and accordingly there is room for improvement in terms of these points.

A purpose of the present invention is to provide a control valve that is excellent in a working response to a drive force by an actuator and is able to accurately function.

### Means for Solving the Problem

In order to solve the aforementioned problem, a control valve according to an embodiment of the present invention comprises: a body having an inlet port for introducing a fluid from an upstream side, an outlet port for delivering the fluid to a downstream side, and a valve hole for communicating the inlet port and the outlet port; a valve element having flexibility configured to open and close a valve portion by being attached and detached to and from a valve seat provided at an opening portion of the valve hole; an actuator configured to drive the valve element in the opening and closing direction of the valve portion; a pressure-receiving portion configured to work integrally with the valve element by being arranged to face the valve element and configured to receive a pressure, oriented oppositely to the valve element, on a surface that faces the valve element; and a receiving-pressure adjusting member having flexibility configured to enlarge an effective pressure-receiving area of the pressure-receiving portion by closely contacting the pressure-receiving portion when the valve portion is closed.

Herein, the "valve element" has flexibility in a portion where it is attached and detached to and from the valve seat; however, it may be formed of an elastic body. Also, the "receiving-pressure adjusting member" has flexibility in a portion where it closely contacts the pressure-receiving portion; however, it may be formed of an elastic body.

According to this embodiment, as the effective pressure-receiving area of the pressure-receiving portion becomes larger than that of the valve hole with the valve element being seated on the valve seat, the receiving-pressure adjusting member more closely contacts the pressure-receiving potion, and hence an effective pressure-receiving area of a combined body, formed by the pressure-receiving portion and the receiving-pressure adjusting member, is more enlarged. That is, as an influence of a pressure, which acts on the valve element when the valve is closed, becomes larger, an influence of a pressure that acts on the pressure-receiving portion becomes larger so as to counteract the former influence. As a result, it becomes possible to accurately cancel an influence of a pressure that acts on the valve element. Thereby, the working response of the valve element to a drive force by the actuator can be improved.

### Advantage of the Invention

According to the present invention, a control valve that is excellent in a working response to a drive force by an actuator and is able to accurately function can be provided.

### BRIEF DESCRIPTION OF THE DRAWINGS

Fig. 1 is a sectional view illustrating the structure of a control valve according to First Embodiment;
Fig. 2 is a partial enlarged sectional view illustrating a pressure cancellation structure of a valve driven member;
Fig. 3 is a view illustrating a working state of the control valve;
Fig. 4 is a sectional view illustrating the specific structure of a control valve according to Second Embodiment;
Figs. 5(A) and 5(B) are partial enlarged views of Fig. 4;
Fig. 6 is a view illustrating a working state of the control valve; and
Fig. 7 is a view illustrating a working state of the control valve.

### BEST MODE FOR CARRYING OUT THE INVENTION

Hereinafter, preferred embodiments of the present invention will de described in detail with reference to the accompanying drawings. In the following description, for convenience, a positional relationship may be expressed on the basis of the illustrated state.

### [First Embodiment]

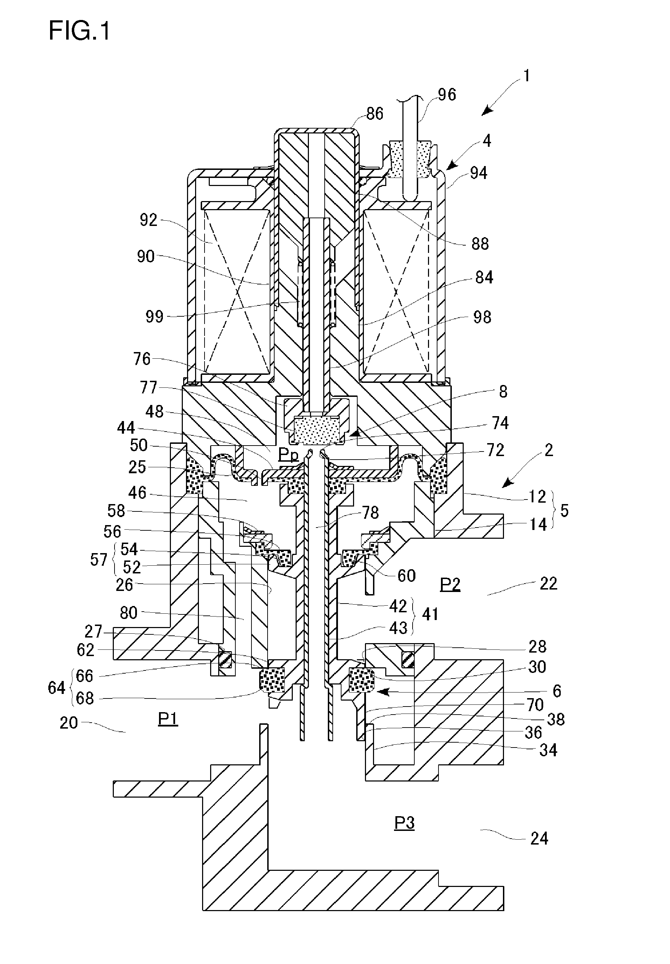

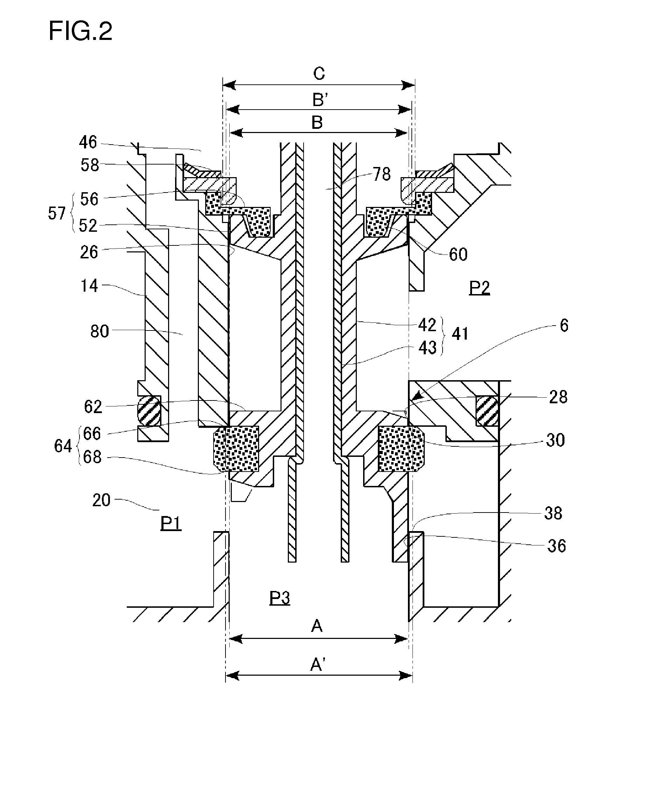

Fig. 1 is a sectional view illustrating the structure of the control valve according to First Embodiment. Fig. 2 is a partial enlarged sectional view illustrating a pressure cancellation structure of a valve driven member. A control valve 1 according to the present embodiment is provided at a branch point in a refrigerant circulation passage in an automotive air conditioner, and is formed as a switching valve for switching a flow of a refrigerant from an upstream passage to each of branched passages on a downstream side. That is, the control valve 1 guides the refrigerant introduced from the upstream passage to one of a first downstream passage and a second downstream passage.

As illustrated in Fig. 1, the control valve 1 is formed by assembling a valve main body 2 in which a valve mechanism is housed and a solenoid 4 for driving the valve mechanism. In a body 5 of the valve main body 2, both a main valve 6 for switching a flow of the refrigerant from the upstream passage to the first downstream passage or the second downstream passage, and a pilot valve 8 for controlling opened and closed states of the main valve 6, are installed.

The body 5 is formed by coaxially fitting a second body 14 made of a resin into an upper half portion of a first body 12 made of a metal. On one side surface of the first body 12, an inlet port 20 leading to the upstream passage is provided at the central portion thereof. On a side surface of the first body 12, opposite to the one side surface, an outlet port 22 leading to the first downstream passage (which corresponds to a "first outlet port") is provided in an upper portion thereof, and an outlet port 24 leading to the second downstream passage (which corresponds to a "second outlet port") is provided in a lower portion thereof.

The second body 14 has a main body having a stepped cylindrical shape whose diameter is gradually reduced toward the down side, and is coaxially press-fitted into the first body 12. A diaphragm 25 is arranged at an upper end portion of the second body 14, and an O-ring 27 is fitted around an outer circumferential surface of a lower end portion thereof. Thereby, leakage of the refrigerant, possibly occurring through a space between the first body 12 and the second body 14, is prevented. An inner circumferential surface of a lower half portion of the second body 14 forms a guide hole 26, and a lower end portion of the guide hole 26 forms a valve hole 28 (which corresponds to a "first valve hole"). In addition, a valve seat 30 (which corresponds to a "first valve seat") is formed by a lower end opening edge of the second body 14. A lower end opening portion of the second body 14 communicates with the inlet port 20. On a surface of the second body 14 that faces the outlet port 22, a communication hole that communicates the inside and the outside of the second body 14 is formed. A first passage connecting the upstream passage and the first downstream passage together is formed by an inner passage connecting the inlet port 20, the valve hole 28, and the outlet port 22 together.

In a communicating portion between the inlet port 20 and the outlet port 24 in the first body 12, a valve seat forming portion 34 having a circular boss shape is formed. The valve seat forming portion 34 protrudes toward the second body 14, and a valve hole 36 (which corresponds to a "second valve hole") is formed inside the portion 34. In addition, a valve seat 38 (which corresponds to a "second valve seat") is formed by an upper end opening edge of the valve seat forming portion 34. A second passage connecting the upstream passage and the second downstream passage together is formed by an inner passage connecting the inlet port 20, the valve hole 36, and the outlet port 24 together.

A valve driven member 41 is arranged inside the body 5. The valve driven member 41 has both a valve forming member 42 having a stepped cylindrical shape, which extends through a central portion of the body 5 by penetrating the valve holes 28 and 36, and a valve seat forming member 43 having a cylindrical shape, which is provided so as to penetrate the valve forming member 42. An upper end portion of the valve driven member 41 is connected to the diaphragm 25 and a stopper 44. The diaphragm 25 has a main body that has flexibility and a circular thin film shape, and an outer peripheral portion thereof is supported by being positioned between the body 5 and the solenoid 4 and a central portion thereof is supported by being positioned between the stopper 44 and the valve forming member 42. The diaphragm 25 has a large thickness in each of the outer periphery portion and the central portion and also functions as a sealing member.

The diaphragm 25 functions as a "partition part" that partitions the inside of the body 5 into a high-pressure chamber 46 and a back-pressure chamber 48. An upper end potion of the valve seat forming member 43 extends into the back-pressure chamber 48 by penetrating center portions of the diaphragm 25 and the stopper 44. The stopper 44 has a bottomed cylindrical shape and supports the diaphragm 25 by positioning it between the bottom thereof and an upper surface of the valve forming member 42. The stopper 44 is fixed to the diaphragm 25 and the valve seat forming member 43 with snap rings (retaining rings). By stopping an upper end opening portion of the stopper 44 on a lower surface of the solenoid 4, as illustrated, an upward movement of the valve driven member 41 is regulated. In addition, a leak passage 50 having a tiny section, which communicates the high-pressure chamber 46 and the back-pressure chamber 48 by penetrating the diaphragm 25, is provided in the stopper 44.

A flange portion 52 extending radially outward (which functions as a "pressure-receiving portion") is provided at a central portion in the longitudinal direction of the valve driven member 41, and is slidably supported by the guide hole 26 of the second body 14. A concaved and annular engaged portion 54 is formed on an upper surface of the flange portion 52. On the other hand, a ring-shaped sealing member 56 (which functions as a "receiving-pressure adjusting member") is arranged in an upper end central opening portion of the second body 14. In the present embodiment, the sealing member 56 is formed by a thin film-shaped diaphragm, and an outer peripheral portion thereof is supported by being positioned between the second body 14 and a ring-shaped fixing member 58. In addition, an engaged portion 60 having a circular boss shape (bead shape) is provided in a central opening portion of the sealing member 56 in a manner in which the engaged portion 60 protrudes downward, and is formed such that it can be engaged by the annular engaged portion 54 of the valve forming member 42.

The fixing member 58 is made of a resin material, and round chamfering is performed on a lower surface inner periphery thereof such that the sealing member 56 is not damaged even if the fixing member 58 contacts it. Falling of the fixing member 58 from the second body 14 is prevented by snap rings (retaining rings). The flange portion 52 and the sealing member 56 function as "partition parts" that partition a lower half portion of the second body 14. On the other hand, a communication passage 80 that communicates the inlet port 20 and the high-pressure chamber 46 is formed near to an outer circumference of the second body 14.

A flange portion 62 protruding radially outward is provided at a lower end portion of the flange forming member 42, and a valve element forming member 64 made of a ring-shaped elastic body (rubber in the present example) is fitted around an outer circumferential surface of the flange portion 62. An upper end portion of the valve element forming member 64 forms a valve element 66 (which corresponds to a "first valve element"), and opens and closes the first passage by being attached and detached to and from the valve seat 30. In addition, a lower end portion of the valve element forming member 64 forms a valve element 68 (which corresponds to a "second valve element"), and opens and closes the second passage by being attached and detached to and from the valve seat 38. A plurality of leg portions 70 are extended downward from the flange portion 62 (only one of them is illustrated in the view), and is slidably supported by an inner circumferential surface of the valve hole 36. The valve driven member 41 stably works in the opening and closing direction of the valve portion by making the flange portion 52 and the leg portions 70 to be slidably supported on an inner circumferential surface of the body 5.

The valve seat forming member 43 is inserted along the axis line of the valve forming member 42, and the diameter of the upper end portion thereof is reduced to form a pilot valve hole 72. And, a pilot valve seat 74 is formed by the upper end surface of the valve seat forming member 43. In the back-pressure chamber 48, a pilot valve element 76 driven by the solenoid 4 is arranged. The pilot valve element 76 is formed by installing an elastic body 77 (rubber in the present example) at a lower end center thereof to open and close the pilot valve 8 by being attached and detached to and from the pilot valve seat 74. The pilot valve hole 72 forms part of a pilot passage 78 formed inside the valve seat forming member 43. The valve seat forming member 43 is extended such that a lower end opening portion thereof is located at a position lower than that of the valve seat 38, even when the valve driven member 41 is located at a top dead center, as illustrated.

In the aforementioned structure, a pressure P1 on the upstream side (referred to as an "upstream pressure P1"), which has been introduced from the inlet port 20, becomes a pressure P2 (referred to as a "downstream pressure P2") by passing through the main valve 6 in the first passage, while becomes a pressure P3 (referred to as a "downstream pressure P3") by passing through the main valve 6 in the second passage. In addition, the upstream pressure P1 is introduced into the high-pressure chamber 46 after passing through the communication passage 80, and becomes an intermediate pressure Pp in the back-pressure chamber 48 by passing through the leak passage 50, and further becomes the downstream pressure P3 by passing through the pilot valve 8.

Herein, as illustrated in Fig. 2, an effective diameter A of each of the valve holes 28 and 36 and an effective diameter B of the guide hole 26 are set to be equal to each other (an effective pressure-receiving area of the flange portion 62 and that of the flange portion 52 are set to be substantially equal to each other) in the present embodiment, and hence an influence of the downstream pressure P2, possibly acting on the valve driven member 41, is canceled. In particular, the pressure cancellation can be strictly achieved by providing the sealing member 56. That is, when the first valve portion is closed by the valve element 66, as illustrated, a lower surface of the sealing member 56 and the upper surface of the flange portion 52 closely contact each other, thereby allowing a receiving-pressure adjusting structure, by which an effective pressure-receiving area of an pressure-receiving body 57 that is a combined body of the sealing member 56 and the flange portion 52 is enlarged, to be achieved.

That is, an effective pressure-receiving area of the valve element 66 is set to correspond to the effective diameter A of the valve hole 28. However, in a complete sealing state where the valve element 66 is seated on the valve seat 30, as illustrated, an actual effective pressure-receiving diameter A' becomes slightly larger than the effective diameter A of the valve hole 28 due to the property (deformation) of the elastic body forming the valve element 66 (and valve element 68) (see the two-dot chain lines in the view). To deal with this, an effective pressure-receiving diameter B' of the pressure-receiving body 57 that faces the valve element 66 is set to be slightly larger than the effective diameter B of the guide hole 26 by making the upper surface of the flange portion 52 to closely contact the lower surface of the sealing member 56 in the complete sealing state (matched to the two-dot chain lines in the view).

Specifically, the effective pressure-receiving diameter B' becomes an intermediate diameter between: a diameter C of an inner periphery that is positioned, at an outer circumferential portion of the sealing member 56, between the fixing member 58 and the second body 14; and the outer diameter B of the flange portion 52 (B' = B + C/2), as illustrated. Because it is structured that, when the first valve portion is closed, the effective pressure-receiving diameter A' of the valve element 66 and the effective pressure-receiving diameter B' of the pressure-receiving body 57 become equal to each other, complete pressure cancellation of the downstream pressure P2 can be achieved. Thereby, it is structured that, when the solenoid 4 is turned off, the first valve portion can be surely closed with the valve element 66 swiftly being seated on the valve seat 30.

When the valve element 66 moves in the valve-opening direction (when the valve element 68 moves in the valve-closing direction) with the solenoid 4 being turned on, the state where the lower surface of the sealing member 56 and the upper surface of the flange portion 52 closely contact each other is released. Accordingly, the effective pressure-receiving diameter A of the valve element 66 and the effective pressure-receiving diameter B of the pressure-receiving body 57 become equal to each other, and hence pressure cancellation can be achieved. The valve element 66 swiftly moves in the valve-opening direction with a biasing force by the solenoid 4.

When the first valve portion is opened, the lower surface of the sealing member 56 and the upper surface of the flange portion 52 are separated from each other at the periphery portions thereof, and hence a displacement of the valve driven member 41 is not regulated by the sealing member 56. That is, a stroke of the valve driven member 41 can be made large to the extent not being inferior to, for example, that of a bellows valve, although the sealing member 56 is a pressure-receiving member having a thin film shape (diaphragm). Further, because a sealing member, such as an O-ring, is not provided on a sliding surface between the valve driven member 41 and the second body 14, a sliding resistance of the valve driven member 41 can be made very small. Thereby, the valve driven member 41 can be made to work smoothly in the opening and closing direction of the valve portion, even when a drive force (solenoid force) acting on the valve driven member 41 is small. That is, because a differential pressure, possibly acting on the valve driven member 41, is canceled and the sliding resistance is small, it becomes possible to maintain a response of the control valve 1 with respect to an opening/closing control in a good condition, even when a drive force for opening/closing the control valve 1 is small.

Returning back to Fig. 1, the solenoid 4 has both a stepped cylindrical core 84 (fixed iron core), which is fixed so as to seal the upper end opening portion of the body 5, and a bottomed cylindrical sleeve 86 attached so as to house the upper half portion of the core 84. A plunger 88 is housed in the sleeve 86 in a state where the plunger 88 is arranged to face the core 84 in the axial direction. A bobbin 90 is provided in the outer circumferential portion of the sleeve 86, and a magnet coil 92 is wound around the bobbin 90. A case 94 is provided so as to cover the magnet coil 92 from the outside. The sleeve 86 penetrates the case 94 in the axial direction. A harness 96 for power supply is pulled out of the magnet coil 92.

The plunger 88 has a cylindrical shape and an upper end portion of an actuating rod is press-fitted into the lower half portion thereof. The actuating rod has a cylindrical shape and penetrates the core 84 to be connected to the pilot valve element 76. That is, the pilot valve element 76 is provided integrally with the plunger 88 through the actuating rod 98. That is, the pilot valve element 76 works integrally with the plunger 88. A spring 99 is interposed between the core 84 and the plunger 88. The spring 99 biases the pilot valve element 76 in the valve-opening direction through the plunger 88.

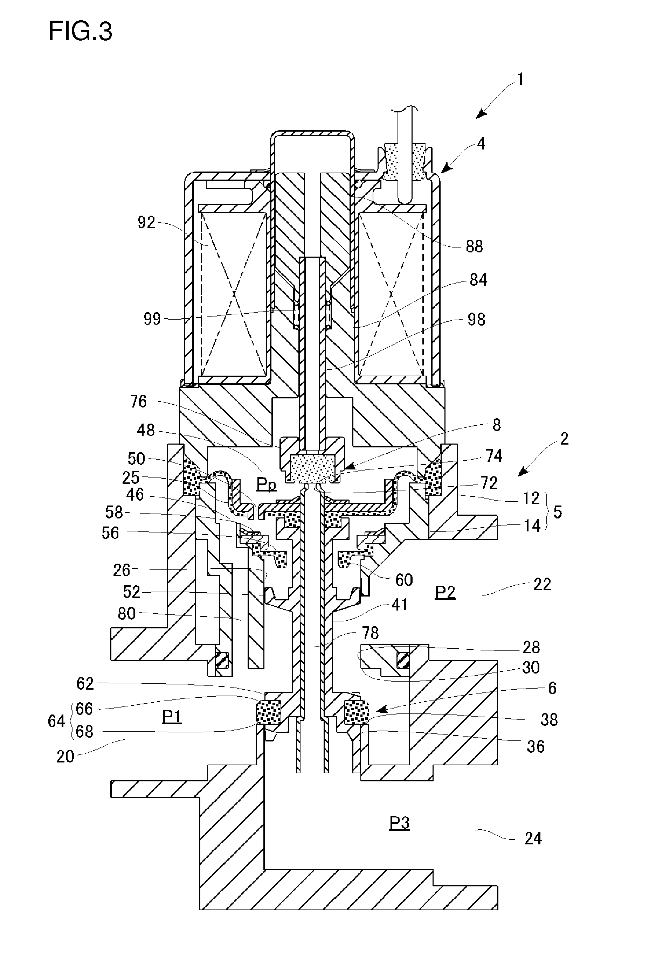

The control valve 1 structured as stated above functions as a control valve of a pilot-operated type configured to switch flow passages of a refrigerant in accordance with a state where the solenoid 4 is powered. Hereinafter, movements thereof will be described in detail. Fig. 3 is a view illustrating a working state of the control valve. Fig. 3 represents a power-supply state where the solenoid 4 is turned on. Herein, the already described Fig. 1 represents a power-supply state where the solenoid 4 is turned off.

Because a solenoid force does not act in a state where the solenoid 4 is turned off, as illustrated in Fig. 1, the pilot valve element 76 is biased in the valve-opening direction by the spring 99 to open the pilot valve 8. At the time, the refrigerant in the back-pressure chamber 48 is delivered to the downstream side through the pilot passage 78 and the intermediate pressure Pp is lowered, and hence the valve driven member 41 is biased upward by the differential pressure (P1-Pp) between the upstream pressure P1 and the intermediate pressure Pp. Thereby, in the main valve 6, the valve element 66 is closed and the valve element 68 is opened. As a result, a state is achieved where the second passage is opened and the first passage is closed, as illustrated. That is, the refrigerant introduced from the upstream passage is delivered from the outlet port 24 toward a bypass passage.

On the other hand, when the solenoid 4 is turned on, a suction force acts between the plunger 88 and the core 84 by the solenoid force, and hence the pilot valve element 76 is biased in the valve-closing direction to close the pilot valve 8. At the time, the refrigerant is introduced from the upstream side through the leak passage 50, and hence the intermediate pressure becomes equal to the upstream pressure P1. At the time, the pressure of the refrigerant to act on the valve driven member 41 is canceled and the sliding resistance between the valve driven member 41 and the body 5 is also small, and hence the valve driven member 41 is smoothly driven by the solenoid force. As a result, in the main valve 6, the valve element 66 is swiftly opened and the valve element 68 is swiftly closed. That is, a state is achieved where the first passage is opened and the second passage is closed, as illustrated, and the refrigerant introduced from the upstream passage is delivered from the outlet port 22 toward a condenser.

### [Second Embodiment]

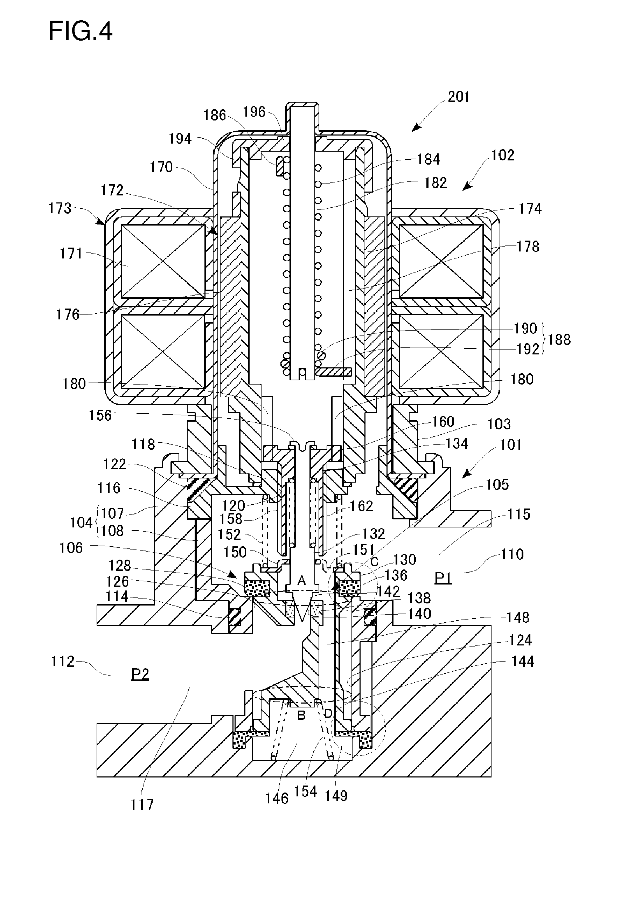

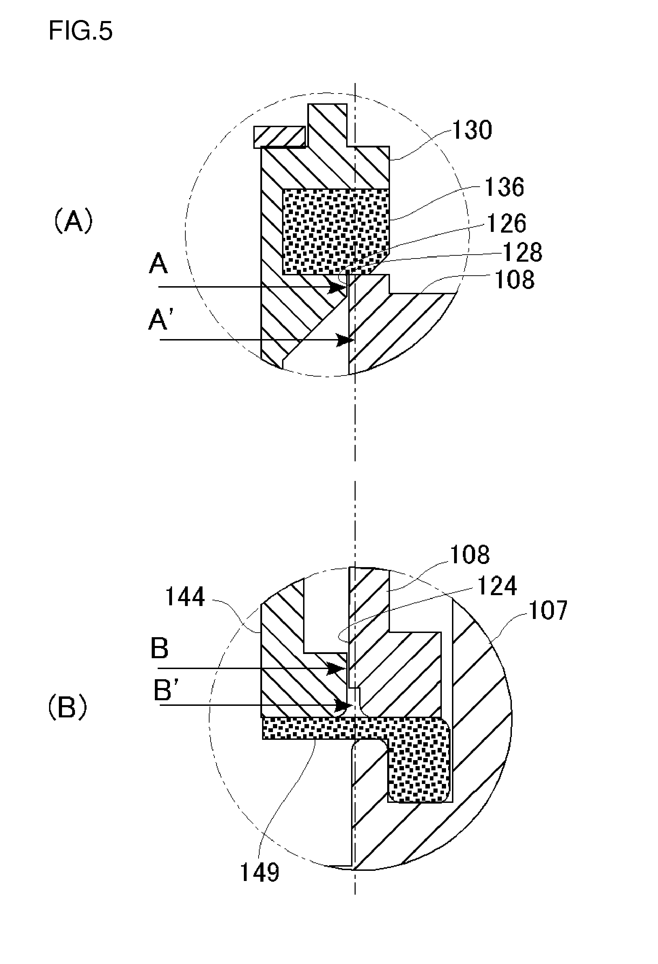

Subsequently, Second Embodiment of the present invention will be described. A control valve according to the present embodiment is a proportional valve whose opening degree is adjusted to a preset one, and is different from the control valve in First Embodiment in that an actuator is formed by a stepping motor and is formed as a two-way valve, not a three-way valve. Fig. 4 is a sectional view illustrating the specific structure of the control valve according to Second Embodiment. Figs. 5(A) and 5(B) are partial enlarged views Fig. 4; in which Fig. 5(A) illustrates an enlarged view of the C portion in Fig. 4, and Fig. 5(B) illustrates an enlarged view of the D portion in Fig. 4.

In a control valve 201 according to the present embodiment, an opening degree is autonomously adjusted to one preset in accordance with a current value supplied to an actuator. The control valve 201 is basically controlled so as to be in one state selected from the group consisting of a fully-opened state, a large aperture control state, a small aperture control state, and a closed state. Herein, the large aperture control state means a state where the valve is not fully opened, but opened so as to have a large opening degree; and the small aperture control state means a state where the valve is opened so as to have a small opening degree, but not closed. The control valve 201 also functions as an expansion device by the small aperture control.

As illustrated in Fig. 4, the control valve 201 is formed as a motorized valve driven by a stepping motor, and is formed by assembling a valve main body 101 and a motor unit 102 through a connecting member 103. The valve main body 101 is formed by coaxially housing, in a bottomed cylindrical body 104, a first valve 105 having a small aperture (which opens and closes a "first valve portion") and a second valve 106 having a large aperture (which opens and closes a "second valve portion").

The body 104 is formed by coaxilly fitting a second body 108 made of a resin into a first body 107 made of a metal. An inlet port 110 is provided in one side portion of the first body 107, and an outlet port 112 is provided in the other side portion thereof.

The second body 108 has a main body having a stepped cylindrical shape whose diameter is reduced toward the down side, and is coaxially press-fitted into the first body 107. On each of a surface of the second body 108, facing the inlet port 110, and a surface thereof, facing the outlet port 112, a communication hole for communicating the inside and the outside of the each of the surfaces is provided. An O-ring 114 is arranged so as to seal a neighborhood of each of the communication hole.

A disk-shaped partition member 116 is arranged between the second body 108 and the connecting member 103. The partition member 116 is supported with the outer periphery portion thereof being positioned between the connecting member 103 and the second body 108, and partitions the inside of the valve main body 101 and that of the motor unit 102. A circular bearing part 118 is provided at a central portion of the partition member 116. A female thread portion 120 is provided on an inner circumferential surface of the bearing part 118, so that an outer circumferential surface thereof functions as a plain bearing. A ring-shaped sealing member 122 is interposed between the connecting member 103 and the partition member 116. A lower half portion of the second body 108 is reduced in diameter, and an inner circumferential surface of the lower half portion forms a guide hole 124, and an upper end portion of the lower half portion forms a valve hole 126 (which corresponds to a "second valve hole"). A valve seat 128 (which corresponds to a "second valve seat") is formed by an upper end opening edge of the valve hole 126.

A valve element 130 having a large diameter (which corresponds to a "second valve element"), an valve element 132 having a small diameter (which corresponds to a "first valve element"), and a valve actuating member 134 are coaxially arranged inside the body 104. The valve element 130 opens and closes the second valve portion having a large aperture by contacting and leaving the valve hole 126 from an upstream side. A valve member 136 made of a ring-shaped elastic body (e.g., rubber) is fitted around an outer circumferential surface of the valve element 130, and hence it becomes possible to completely close the second valve portion with the valve member 136 being seated on the valve seat 128. A stepped hole penetrating the center of the valve element 130 in the axial direction is provided, and a ring-shaped valve seat forming member 138 is press-fitted into an upper end opening portion of the stepped hole.

A valve hole 140 (which corresponds to a "first valve hole") is formed by an inner circumferential portion of a valve seat forming member 138, and a valve seat 142 (which corresponds to a "first valve seat") is formed by an upper end opening edge of the valve hole 140. The valve seat forming member 138 is made of a metal body (e.g., stainless steel), and it becomes possible to close the first valve portion with the valve element 132 being seated on the valve seat 142. As illustrated, a high-pressure chamber 115, communicating with the inlet port 110, is formed on an upstream side of the valve holes 126 and 140, while a low-pressure chamber 117, communicating with the outlet port 112, is formed on a downstream side of thereof.

A partition part 144 (which functions as a "pressure-receiving part") is provided successively from the valve element 130 through a diameter-reduced part. The partition part 144 is arranged in the low-pressure chamber 117. A stable movement of the vale element 130, in the opening and closing direction thereof, is secured with a lower end portion of the partition part 144 being slidably supported by the guide hole 124. A back-pressure chamber 146 is formed between the partition part 144 and a bottom of the body 104. In addition, a communicating passage 148, penetrating the valve element 130 and the partition part 144, is formed, by which the high-pressure chamber 115 and the back-pressure chamber 148 communicate with each other. Thereby, the back-pressure chamber 146 is always filled with an upstream pressure P1 introduced from the inlet port 110.

In the present embodiment, an effective diameter A of the valve hole 126 and an effective diameter B of the guide hole 124 are set to be equal to each other (an effective pressure-receiving area of the vale element 130 and that of the partition part 144 are set to be substantially equal to each other), and hence an influence of the upstream pressure P1, possibly acting on the valve element 130, is canceled. In particular, to strictly achieve the pressure cancellation, a receiving-pressure adjusting member 149, configured to enlarge the effective pressure-receiving area of the partition part 144 by closely contacting the part 144 when the second valve portion is closed, is arranged in a lower portion of the part 144. The receiving-pressure adjusting member 149 is made of a thin film-shaped elastic body having a ring shape (e.g., rubber), and is supported with a portion having a large thickness in an outer periphery portion of the member 149 being positioned between the first body 107 and the second body 108.

That is, as illustrated in Fig. 5(A), the effective pressure-receiving area of the valve element 130 is set to correspond to the effective diameter A of the valve hole 126. However, in a complete sealing state where the valve member 136 is seated on the valve seat 128, as illustrated, an actual effective pressure-receiving diameter A' becomes slightly larger than the effective diameter A of the valve hole 126 due to the property of the elastic body (see the two-dot chain lines in the view). To deal with this, as illustrated in Fig. 5(B), an effective pressure-receiving diameter B' on the back-pressure chamber 146 side is set to be slightly larger than the effective diameter B of the guide hole 124 by making the receiving-pressure adjusting member 149 to closely contact a lower surface of the partition part 144 in the complete sealing state (matched to the two-dot chain lines in the view). Complete pressure cancellation is achieved with the effective pressure-receiving area of the valve element 130 and that of the partition part 144 being equal to each other in such a way.

Returning back to Fig. 4, a disk-shaped spring receiving member 150 is provided in an upper end portion of the valve element 130. A Communication hole 151, through which a refrigerant passes through, is provided in the spring receiving member 150. A spring 152 for biasing the valve element 130 in the valve-closing direction (which corresponds to a "biasing member") is interposed between the spring receiving member 150 and the partition member 116. On the other hand, a spring 154 for biasing, through the partition part 144, the valve element 130 in the valve-opening direction (which corresponds to a "biasing member") is interposed between the partition part 144 and the body 104. In the present embodiment, a load of the spring 152 is set to be larger than that of the spring 154.

The valve element 132 has a stepped cylinder shape, and a lower half portion thereof is arranged so as to face the valve hole 140 by penetrating the spring receiving member 150 and an upper half portion thereof is supported by the valve actuating member 134. The valve element 132 is formed as a so-called needle valve element, and a pointed tip portion thereof is inserted and extracted into/from the valve hole 140. The first valve portion is opened and closed by the valve element 132 being attached and detached to and from the valve seat 142. An upper end portion of the valve element 132 penetrates the valve actuating member 134, and the upper end portion serves as a stopper 156 by being caulked outward.

The valve actuating member 134 has a stepped cylindrical shape, and a male thread portion 158 is formed in an outer circumferential portion thereof. The male thread portion 158 is screwed to a female thread portion 120 of the bearing part 118. A plurality of leg portions 160 (four leg portions in the present embodiment), each extending radially outward, are provided at an upper end portion of the valve actuating member 134, which are fitted into an rotor in the motor unit 102. A spring 162 for biasing the valve element 132 in the valve-closing direction is interposed between the valve actuating member 134 and the valve element 132. In a usual state, the valve element 132 is biased downward by the spring 162, as illustrated, while the stopper 156 of the valve element 132 is stopped by the upper end portion of the valve actuating member 134. Accordingly, the valve element 132 is in a state of being located in the lowest portion with respect to the valve actuating member 134.

The valve actuating member 134 rotates when receiving a rotational drive force of the motor unit 102, and converts the rotational drive force into a translational force. That is, when the valve actuating member 134 rotates, the valve actuating member 134 is displaced in the axial direction by a screw mechanism, thereby allowing the valve element 132 to be driven in the opening and closing direction. When the first valve portion is opened, the valve element 132 and the valve actuating member 134 work integrally with each other. In the present embodiment, it is designed that the first valve portion is just closed at a limit position (bottom dead center) in the valve-closing direction to which the valve actuating member 134 can move, as illustrated. However, even when the first valve portion is closed with the valve element 132 being seated on the valve seat 142 before the valve actuating member 134 is located at the bottom dead center, occurring due to an assembling error, etc., if any, it is possible that the vale element 132 is relatively displaced with respect to the valve actuating member 134 by counteracting a biasing force of the spring 162, and hence there is not a problem at all.

On the other hand, the motor unit 102 is formed as a stepping motor including a rotor 172 and a stator 173. The motor unit 102 is formed in such a way that the rotor 172 is rotatably supported inside a sleeve 170 having a bottomed cylindrical shape. The stator 173, in which an exciting coil 171 is housed, is provided at an outer circumference of the sleeve 170. A lower end opening portion of the sleeve 170 is assembled to the body 104 through the connecting member 103, and the sleeve 170 forms the body of the control valve 201, along with the body 104.

The rotor 172 includes: a rotating shaft 174 formed into a cylindrical shape; and a magnet 176 arranged at an outer circumference of the rotating shaft 174. In the present embodiment, the magnet 176 is magnetized with 24 poles.

An internal space, extending across almost the total length of the motor unit 102, is formed inside the rotating shaft 174. A guide part 178, extending parallel to the shaft line, is provided at a particular position on an inner circumferential surface of the rotating shaft 174. The guide part 178 forms a projecting part for being engaged with the later-described rotation stopper, and is formed by one protrusion extending parallel to the shaft line.

A lower end portion of the rotating shaft 174 is reduced in diameter, and four guide parts 180, each extending parallel to the shaft line, are provided in an inner circumferential surface of the shaft 174. Each of the guide parts 180 is formed by a pair of protrusions each extending parallel to the shaft line, and is provided, at a position 90° away from the adjacent guide part 180, on the inner circumferential surface of the rotating shaft 174. The aforementioned four leg portions 160 of the valve actuating member 134 are fitted into these four guide parts 180, so that the rotor 172 and the valve actuating member 134 can rotate integrally with each other. However, a displacement of the valve actuating member 134, occurring in the shaft line direction along the guide parts 180, is allowed, although a relative displacement thereof, occurring in the rotating direction with respect to the rotor 172, is regulated. That is, the valve actuating member 134 is driven in the opening and closing direction of the valve element 132, while rotating along with the rotor 172.

A lengthy shaft 182 is arranged inside the rotor 172 and along the shaft line thereof. The shaft 182 is fixed in a cantilevered manner with an upper end portion thereof being press-fitted into a bottom center of the sleeve 170, and extends parallel to the guide part 178 in the internal space. The shaft 182 is arranged on the same shaft line as that of the valve actuating member 134. A guide part 184 having a spiral shape, extending across almost the total length of the shaft 182, is provided in the shaft 182. The guide part 184 is made of a coil-shaped member and is fitted into an outer surface of the shaft 182. An upper end portion of the guide part 184 is folded back to serve as a stopper 186.

A rotation stopper 188 having a spiral shape is rotatably engaged with the guide part 184. The rotation stopper 188 has both a spiral-shaped engaged portion 190, which is engaged with the guide part 184, and a power transmitting part 192 supported by the rotating shaft 174. The engaged portion 190 has a shape of a single-turn coil, and the power transmission part 192, extending radially outward, is successively provided in a lower end portion of the engaged portion 190. A tip portion of the power transmission part 192 is engaged with the guide part 178. That is, the power transmission part 192 is stopped by contacting one of the protrusions of the guide part 178. Accordingly, a displacement of the rotation stopper 188, occurring in the axial direction while sliding on the guide part 178, is allowed, although a relative displacement thereof, occurring in the rotating direction, is regulated by the rotating shaft 174.

That is, the rotation stopper 188 is driven in the axial direction by rotating integrally with the rotor 172 and by the engaged portion 190 thereof being guided along the guide part 184. However, a range in which the rotation stopper 188 is driven in the axial direction is regulated by stoppers formed on both ends of the guide part 178. In the view, a state where the rotation stopper 188 is located at the bottom dead center is illustrated. When the rotation stopper 188 is displaced upward and stopped by the stopper 186, the position becomes a top dead center.

An upper end portion of the rotor 172 is rotatably supported by the shaft 182, and a lower end portion thereof is rotatably supported the bearing part 118. Specifically, an end portion member 194 having a bottomed cylindrical shape is provided so as to seal an upper end opening portion of the rotating shaft 174, and a portion of a cylindrical shaft 196, provided at a center of the end portion member 194, is supported by the shaft 182. That is, the bearing part 118 serves as a bearing part on one end side, and a sliding portion of the shaft 182 with the cylindrical shaft 196 serves as a bearing part on the other end side.

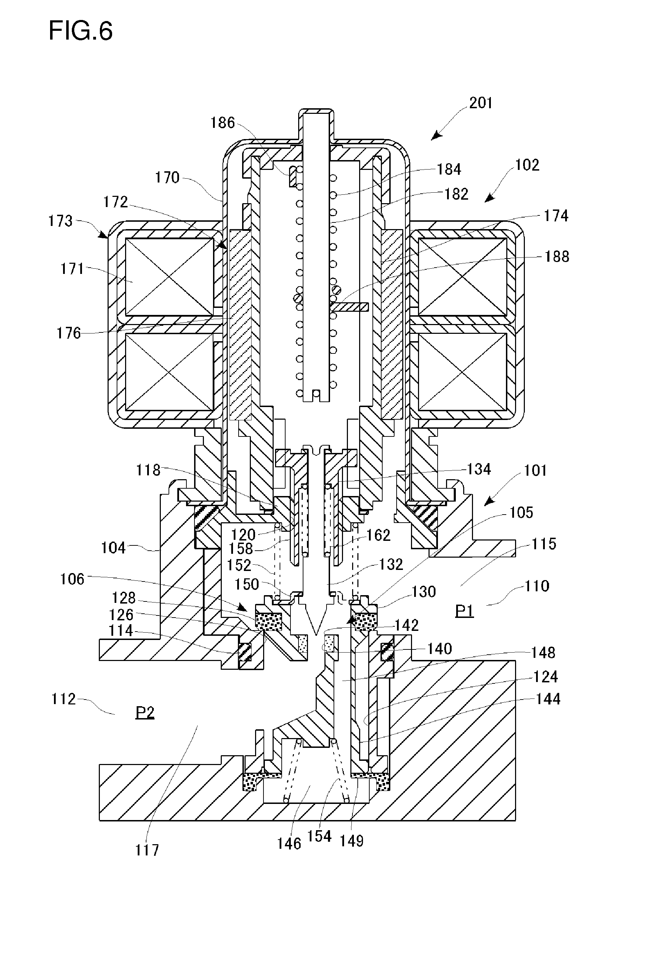

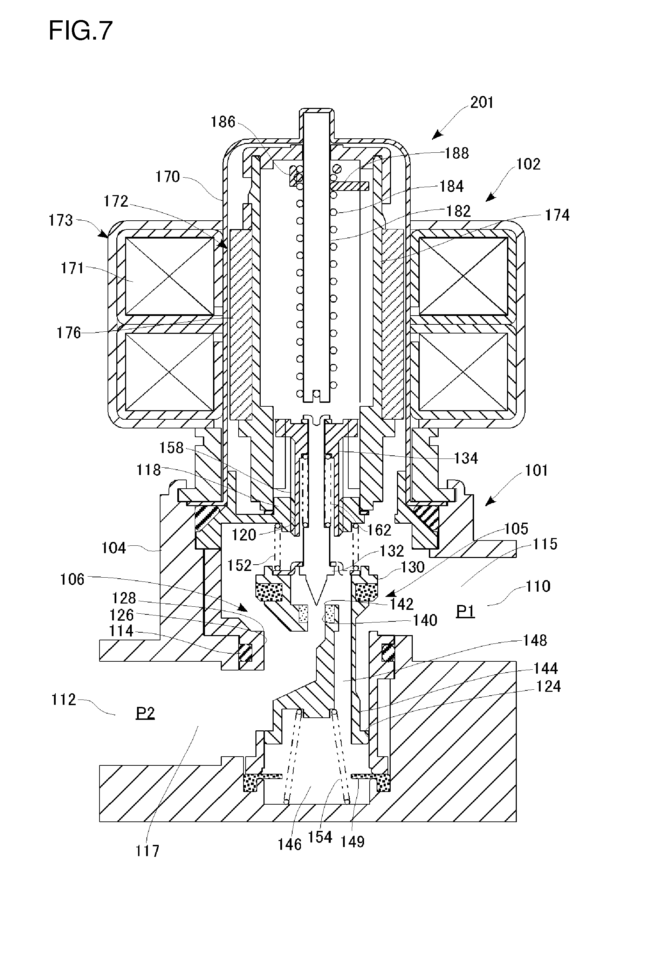

The control valve 201 structured as stated above functions as a stepping motor-operated control valve whose opening degree can be adjusted by drive control of the motor unit 102. Hereinafter, movements thereof will be described in detail. Figs. 6 and 7 are views illustrating working states of the control valve; in which Fig. 6 illustrates a state where the first valve portion is fully opened; and Fig. 7 illustrates a state where the second valve portion is fully opened. The already-described Fig. 4 illustrates a state where the first valve portion and the second valve portion are closed.

In flow rate control of the control valve 201, a non-illustrated controller calculates the number of driving steps of the stepping motor in accordance with a preset opening degree, and supplies a drive current (drive pulse) to the exciting coil 171. Thereby, the rotor 172 rotates, and on one hand, an opening degree of each of the first valve portion having a small aperture and the second valve portion having a large aperture is adjusted to the preset opening degree with the valve actuating member 134 being rotationally driven; and on the other hand, the rotation stopper 188 is driven along the guide part 184, thereby allowing a range in which each of the valve elements moves.

Specifically, when small aperture control, such as during a specific heating operation for performing dehumidification control, is performed, the valve element 132 is displaced in the valve-opening direction with the rotor 172 being rotationally driven in one direction (normal rotation), thereby allowing the first valve portion to be opened. That is, the valve element 132 is driven within a range between the fully-closed state illustrated in Fig. 4 and the fully-opened state illustrated in Fig. 6. In the present embodiment, the first valve portion is in a fully-opened state after the rotor 172 rotates five times from a closed state of the first valve portion, thereby allowing the valve element 132 to be lifted by 2.5 mm from the valve seat 142 (0.5 mm per rotation). Meanwhile, a valve opening degree (valve stroke) of the first valve having a small aperture varies proportionally.

When large aperture control, such as during a defrosting operation, is performed, the rotor 172 is further rotated in the same direction (normal rotation) from the fully opened state of the first valve portion illustrated in Fig. 6. As a result, the valve element 130 is driven in the valve-opening direction in a state of being lifted by the valve element 132. At the time, the spring receiving member 150 stops the valve element 132 by serving as a stopper, thereby an opening degree of the first valve portion (a fully-opened state) is maintained at a constant value. Conversely, the spring receiving member 150 is lifted along with the valve element 132, and hence the valve element 130 is driven in the valve-opening direction by the biasing force of the spring 154.

At the time, the valve element 130 is driven within a range between the fully-closed state illustrated in Fig. 6 and the fully-opened state illustrated in Fig. 7. In the present embodiment, the second valve portion is in a fully-opened state after the rotor 172 rotates seven times from the fully-closed state of the second valve portion (a fully-opened state of the first valve portion), thereby allowing the valve element 130 to be lifted by 3.5 mm from the valve seat 128 (0.5 mm per rotation). That is, the rotation stopper 188 is stopped by the stopper 186 at the top dead center, and as a result, the rotation of the rotor 172 is stopped itself. Meanwhile, a valve opening degree (valve stroke) of the second valve portion having a large aperture varies proportionally. Herein, when the rotor 172 is rotated in the opposite direction, the valve elements 130 and 132 move in the valve-closing direction in a way that is inverse to the aforementioned one. The number of rotations of the rotor 172 corresponds to the number of driving steps as a control command value.

Preferred embodiments of the present invention have been described above, but it is needless to say that the invention should not be limited to the specific embodiments and various variations may be made within the scope of the technical idea of the invention.

A control valve according to the aforementioned embodiments is suitable for a vehicle air conditioner, such as an automobile in which an internal-combustion engine is mounted, an automobile of a hybrid type in which an internal-combustion engine and an electric motor are mounted, an electric car, or the like, but it is needless to say that the control valve can be applied to an air conditioner other than a vehicle one. Further, a control valve according to the aforementioned embodiments can be applied to an application other than an air conditioner. Also, the control valve can be used as a control valve for controlling a flow of, for example, water, oil, or other working fluids, not a refrigerant.

### Reference Numerals

- 1: CONTROL VALVE
- 2: VALVE MAIN BODY
- 4: SOLENOID
- 5: BODY
- 6: MAIN VALVE
- 8: PILOT VALVE
- 20: INLET PORT
- 22, 24: OUTLET PORT
- 25: DIAPHRAGM
- 26: GUIDE HOLE
- 28: VALVE HOLE
- 30: VALVE SEAT
- 36: VALVE HOLE
- 38: VALVE SEAT
- 41: VALVE DRIVEN MEMBER
- 42: VALVE FORMING MEMBER
- 43: VALVE SEAT FORMING MEMBER
- 44: STOPPER
- 46: HIGH-PRESSURE CHAMBER
- 48: BACK-PRESSURE CHAMBER
- 50: LEAK PASSAGE
- 52: FLANGE PORTION
- 54: ANNULAR ENGAGED PORTION
- 56: SEALING MEMBER
- 57: PRESSURE-RECEIVING BODY
- 60: ENGAGED PORTION
- 62: FLANGE PORTION
- 64: VALVE ELEMENT FORMING MEMBER
- 66, 68: VALVE ELEMENT
- 72: PILOT VALVE HOLE
- 74: PILOT VALVE SEAT
- 76: PILOT VALVE ELEMENT
- 78: PILOT PASSAGE
- 80: COMMUNICATION PASSAGE
- 84: CORE
- 88: PLUNGER
- 98: ACTUATING ROD
- 101: VALVE MAIN BODY
- 102: MOTOR UNIT
- 104: BODY
- 105: FIRST VALVE
- 106: SECOND VALVE
- 110: INLET PORT
- 112: OUTLET PORT
- 115: HIGH-PRESSURE CHAMBER
- 116: PARTITION MEMBER
- 117: LOW-PRESSURE CHAMBER
- 124: GUIDE HOLE
- 126: VALVE HOLE
- 128: VALVE SEAT
- 130, 132: VALVE ELEMENT
- 134: VALVE ACTUATING MEMBER
- 136: VALVE MEMBER
- 138: VALVE SEAT FORMING MEMBER
- 140: VALVE HOLE
- 142: VALVE SEAT
- 144: PARTITION PART
- 146: BACK-PRESSURE CHAMBER
- 148: COMMUNICATION PASSAGE
- 149: RECEIVED-PRESSURE ADJUSTING MEMBER
- 156: STOPPER
- 172: ROTOR
- 173: STATOR
- 174: ROTATING SHAFT
- 176: MAGNET
- 178, 180: GUIDE PART
- 182: SHAFT
- 184: GUIDE PART
- 186: STOPPER
- 188: ROTATION STOPPER
- 190: ENGAGED PORTION
- 192: POWER TRANSMISSION PART
- 201: CONTROL VALVE

## Claims

1. A control valve comprising:
a body having an inlet port for introducing a fluid from an upstream side, an outlet port for delivering the fluid to a downstream side,
and a valve hole for communicating the inlet port and the outlet port;
a valve element having flexibility configured to open and close a valve portion by being attached and detached to and from a valve seat provided at an opening portion of the valve hole;
an actuator configured to drive the valve element in the opening and closing direction of the valve portion;
a pressure-receiving portion configured to work integrally with the valve element by being arranged to face the valve element and
configured to receive a pressure, oriented oppositely to the valve element, on a surface that faces the valve element; and
a receiving-pressure adjusting member having flexibility configured to enlarge an effective pressure-receiving area of the pressure-receiving portion by closely contacting the pressure-receiving portion when the valve portion is closed.

2. The control valve according to claim 1, wherein
the receiving-pressure adjusting member is supported by the body such that an area of the receiving-pressure adjusting member, in which the receiving-pressure adjusting member contacts the pressure-receiving portion, becomes small by at least partially separating from the pressure-receiving portion when the valve element moves from a valve closed state to a valve opened state.

3. The control valve according to claim 1 or 2, wherein
the body includes a guide hole, the effective diameter of which is equal to that of the valve hole and which is provided coaxially with the valve hole, and wherein
the pressure-receiving portion is slidably supported in the opening and closing direction of the valve portion along the guide hole; and wherein
the receiving-pressure adjusting member is arranged at a position in the body different from that of a sliding surface of the pressure-receiving portion.

4. The control valve according to any one of claims 1 to 3 being structured such that, when the valve portion is closed, an effective pressure-receiving area of a combined body, which is formed by the pressure-receiving portion and the receiving-pressure adjusting member, and that of the valve element become equal to each other.

5. The control valve according to any one of claims 1 to 4, wherein the receiving-pressure adjusting member is formed by a diaphragm.
